# EUROPÄISCHE PATENTSCHRIFT

(11) **EP 1 613 500 B1**
(45) Veröffentlichungstag und Bekanntmachung des Hinweises auf die Patenterteilung: **09.06.2010**
(21) Anmeldenummer: 04726944.4
(22) Anmeldetag: 13.04.2004
(51) Int. Cl.: B60N 2/30

(54) **KINDERSITZ FÜR EIN FAHRZEUG**
CHILD SEAT FOR A VEHICLE
SIEGE AUTO POUR ENFANT

(30) Priorität: 15.04.2003 CH 680032003
(43) Veröffentlichungstag der Anmeldung: 11.01.2006
(73) Patentinhaber: Prospective Concepts AG, 8152 Glattbrugg (CH)
(72) Erfinder: LEUTERT, Ruedi, CH-4934 Madiswil (CH)
(74) Vertreter: Stump, Beat
(86) Internationale Anmeldenummer: PCT/CH2004/000221
(87) Internationale Veröffentlichungsnummer: WO 2004/091964

(56) Entgegenhaltungen:
- EP-A- 0 691 239
- WO-A-01/66380
- DE-U- 20 016 932
- DE-U- 29 814 284
- US-A- 5 516 188

## Beschreibung

Die vorliegende Erfindung betrifft einen Kindersitz für ein Fahrzeug gemäss dem Oberbegriff des Patentanspruches 1.

Kindersitze als solche sind bekannt. Neben der Sicherheit und dem Komfort für die Kinder ist die leichte Handhabung ein wichtiges Merkmal. Ein Kindersitz soll leicht ein- und ausbaubar sein sowie ein möglichst geringes Gewicht aufweisen, da das Zurechtrücken und Bewegen schwerer Gegenstände im Allgemeinen in einem Personenwagen äusserst unangenehm und in gebückter Haltung auch gesundheitsschädlich ist.

In der Konstruktionsart kommt der vorliegenden Erfindung die Anmeldung PCT/CH03/00017 am nächsten. Das Dokument der selben Anmelderin offenbart pneumatische Sitz- und Lehnkissen für Fahr- und Flugzeuge. Die Kissen sind aus einer gasdichten Hülle aufgebaut. Innerhalb der Hülle verlaufen Stege, welche der gefüllten Hülle die äussere Form geben. Diese Sitz- und Lehnkissen sind als vollwertiger und leichter Ersatz für Sitze in Verkehrsmitteln gedacht.

Obschon diese Kissen pneumatische Gestalt haben, sind sie in permanenter Art eingebaut und fester Bestandteil eines Fahr-oder Flugzeuges. Dadurch sind sie weder zusammenlegbar noch platzsparend.

Die DE 298 14 284 U1 zeigt ein Fahrzeug mit einem Kindersitz gemäß Oberbegriff des Anspruchs 1.

Aufgabe der vorliegenden Erfindung ist es, einen Kindersitz zu gestalten, welcher die erwähnten Nachteile von pneumatischen Sitz- und Lehnkissen überwindet.

Die Lösung der gestellten Aufgabe ist wiedergegeben im kennzeichnenden Teil des unabhängigen Anspruches hinsichtlich ihrer wesentlichen Merkmale und in den abhängigen Ansprüchen hinsichtlich weiterer vorteilhafter Merkmale.

Bei der vorliegende Erfindung handelt es sich um einen pneumatischen Kindersitz. Er kann wie herkömmliche Kindersitze in einem Fahrzeugsitz oder einer Sitzbank seitlich oder in der Mitte eingebaut werden. Selbstverständlich kann der erfindungsgemässe Kindersitz auch an einem andern Ort im Fahrzeuginnern angebracht werden. Wird er nicht benötigt, muss er nicht ausgebaut werden, sondern es wird lediglich die Druckluft abgesaugt und die im Wesentlichen leere Hülle in einer speziell dafür vorgesehenen und verschliessbaren Öffnung, beispielsweise in einem Fahrzeugsitz, verstaut. Wird der Kindersitz wieder benötigt, reicht es, den Verschluss der Öffnung zu lösen und die Hülle wieder mit Druck zu beaufschlagen, wodurch sich der Kindersitz von alleine entfaltet und danach in gewohnter Weise wieder benutzt werden kann.

Anhand der folgenden Figuren wird der erfindungsgemässe Kindersitz im Detail beschrieben.

### Es zeigen

- Fig. 1a-c: Entfalten eines Kindersitzes bei Druckbeaufschla- gung,
- Fig. 2: einen Querschnitt durch einen Fahrzeugsitz mit eingebautem Kindersitz,
- Fig. 3: eine Variante des Kindersitzes,
- Fig. 4: Innere Struktur des Kindersitzes,
- Fig. 5: Detailansicht eines Teils der Rückenpartie.

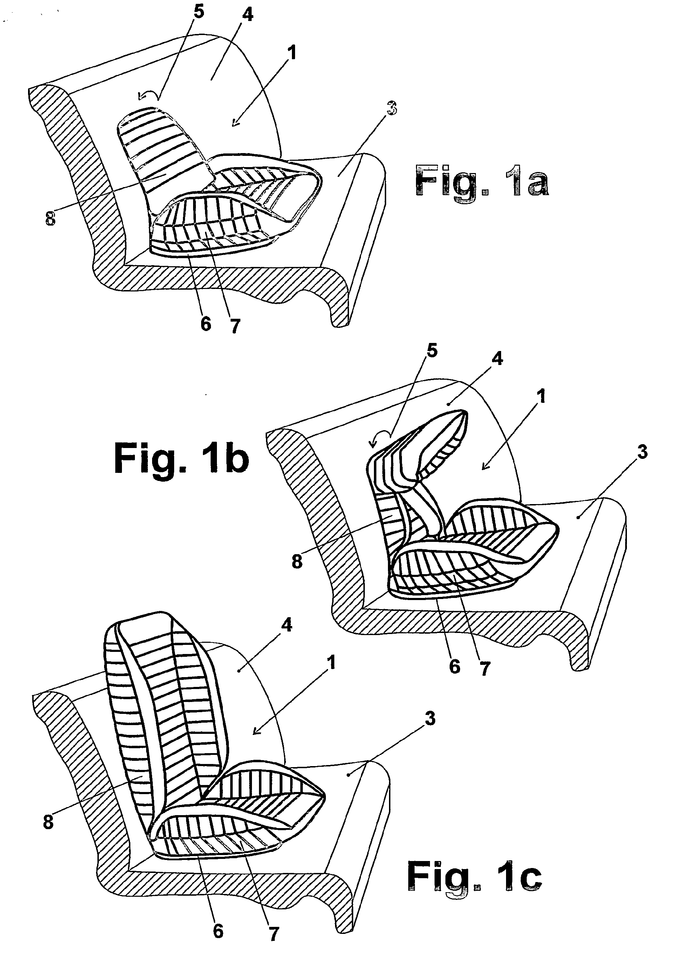

Die Fig. 1a-c zeigen das Entfalten eines erfindungsgemässen Kindersitzes 1 unter Druckbeaufschlagung.

In der Fig. 1a ist eine Öffnung 5 in einer Rückenlehne einer Fahrzeugbank angebracht. Ein Veschlusselement 6 wurde bereits auf eine Sitzfläche 3 hinuntergeklappt und mit der Druckbeaufschlagung begonnen. Ein an dem Verschlusselement 6 befestigtes Sitzkissen 7 wurde mit dem Verschlusselement 6 zusammen aus der Öffnung 5 ausgeklappt und hat schon fast seine pralle Form angenommen. Eine mit dem Sitzkissen 7 zusammenhängende Rückenpartie 8 ist dabei, sich aus der Öffnung 5 heraus zu entfalten. Die Öffnung 5 ist in den Fig. 1a-c in einer Rückenlehne 4 angebracht. Ebenfalls erfindungsgemäss ist es, die Öffnung 5 in der Sitzfläche 3 anzubringen und mit dem Verschlusselement zu verschliessen. In einer solchen Konfiguration ist die Rückenpartie 8 an dem Verschlusselement befestigt und wird beim Öffnen desselben ebenfalls mitausgeklappt.

Selbstverständlich ist es auch möglich, die Öffnung 5 an einem andern geeigneten Ort im Wageninnern anzubringen, beispielsweise in einer Seitenwand, einer Türe, im Fahrzugboden oder einer Armlehne eines Fahrzeugsitzes.

In der Fig 1b ist die Druckbeaufschlagung schon weiter fortgeschritten. Die Rückenpartie 8 ist im Begriff sich aufzurichten und vollends zu entfalten.

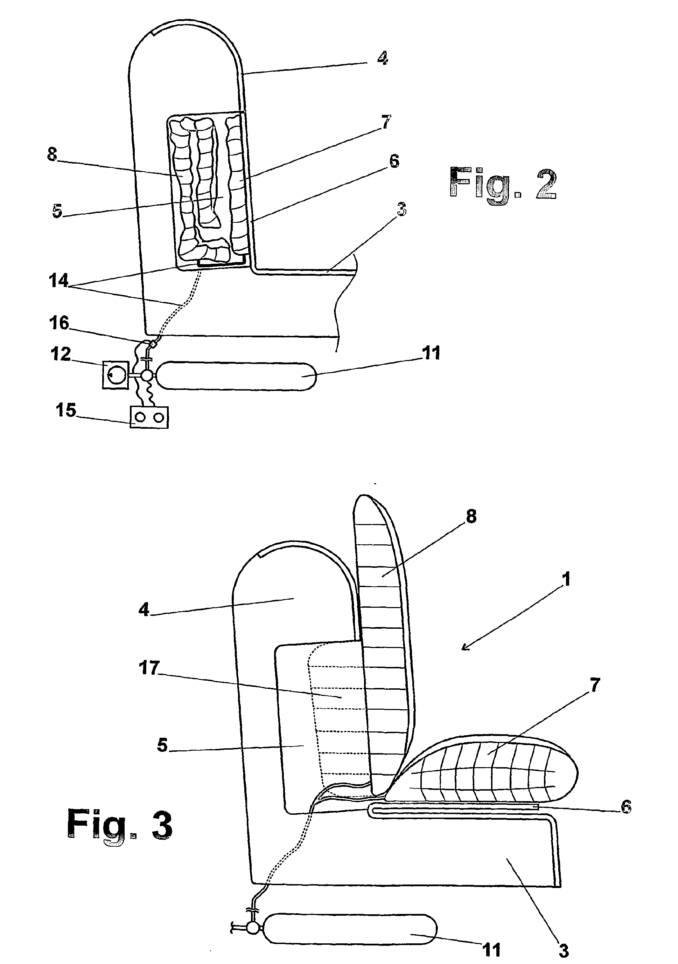

Fig. 1c zeigt den Kindersitz 1 in seiner funktionalen Form. Im dargestellten Beispiel wurden für das Sitzkissen und die Rückenpartie Schalenformen gewählt, welche ein Kind vor allem bei Kurvenfahrten auch seitlich zu stützen vermögen. Selbstverständlich sind auch weniger ausgeprägte und flachere Formen realisierbar und im Erfindungsgedanken miteingeschlossen. Die Fig. 2 zeigt einen Querschnitt durch einen Fahrzeugsitz und den vom Druck entlasteten, zusammengelegten und verstauten Kindersitz 1. Das Verschlusselement 6 ist hochgeklappt und verschliesst die Öffnung 5 bündig. Um ein versehentliches Aufklappen zu vermeiden aber auch aus ästhetischen Gründen kann beispielsweise ein Klett- oder Reissverschluss um das Verschlusselement herumlaufend angebracht werden.

Der pneumatische Kindersitz 1 muss aus Verwendungs- und Platzgründen nie ausgebaut werden; wird er benötigt, öffnet man das Verschlusselement 6 und beaufschlagt den Kindersitz 1, wird er nicht mehr benötigt, entlastet man den Kindersitz 1 und verstaut ihn ohne jeglichen Kraftaufwand wieder in der dafür vorgesehenen Öffnung 5. Dabei ist zu beachten, dass der Kindersitz 1 im verstauten Zustand vom Verschlusselement 6 gut geschützt ist und weder Fahrgastraum noch Raum für Gepäck beansprucht.

Das System zur Druckbe- und -entlastung besteht zumindest aus einem Druckgasspeicher 11, einer Vakuumpumpe 12, einem Wegeventil 13 sowie einer Druckgasleitung 14. Nicht dargestellt sind Druckerzeugende Mittel wie beispielsweise ein Kompressor, welcher bei laufendem Motor den Druckgasspeicher füllt. In der Fig. 3 sind diese Elemente 11, 12, 13, 14 nur schematisch angeordnet. Je nach Fahrzeug können diese Elemente 11, 12, 13, 14 an ganz verschiedenen Orten untergebracht werden. Der Druckgasspeicher 11 und die Vakuumpumpe können beispielsweise in der Öffnung 5 selbst aber auch im Motorraum integriert sein. Die Druckgasleitung 14 verbindet den Kindersitz 1 und das Wegeventil 13. Damit kann für die Druckbeaufschlagung und das Leerpumpen dieselbe Druckgasleitung 14 benützt werden. Das Druckmanagement übernimmt eine Steuerkonsole 15, welche an einem sinnvollen Ort im Fahrzeug angebracht ist, beispielsweise am Armaturenbrett. In der einfachsten Konfiguration umfasst die Steuerkonsole einen einzelnen Ein/AusSchalter wobei "Ein" beispielsweise für voll und "Aus" für leer stehen. Um eine übermässige Druckbeaufschlagung zu vermeiden, meldet ein Drucksensor 16 der Steuerkonsole 15 das Erreichen des Betriebsdruckes, worauf die weitere Druckbeaufschlagung gestoppt wird. Kompliziertere Steuerkonsolen mit beispielsweise temperatur- und/oder gewichtsäbhängigem Druckmanagement sind ebenso im erfinderischen Gedanken enthalten, wie andere Konfigurationen des Druckgassystems.

Die Rückenpartie 8 des Kindersitzes kann mit einem dp/dt-Ventil ausgerüstet sein. Wird ein Kind bei einem Auffahrunfall in den Kindersitz 1 gepresst, öffnet sich das dp/dt-Ventil bei erreichen einer vorbestimmten Druckänderung pro Zeiteinheit und entlastet die Rückenpartie 8 innert kürzester Zeit. Damit kann zumindest ein Teil der Stossenergie die das Kind erfährt absorbiert werden, und die auf das Kind wirkenden Beschleunigungskräfte und damit die Verletzungsgefahr können vermindert werden.

In Fig. 3 sind ein Querschnitt durch einen Fahrzeugsitz und einer Seitenansicht des mit Druck beaufschlagten Kindersitzes 1 dargestellt. Damit der Kindersitz richtig positioniert ist und es während der Fahrt auch bleibt, ist er - wie bereits erwähnt - mindestens mit der Innenseite des Verschlusselementes 6 verbunden. Diese Verbindung kann lösbar oder fest sein, beispielsweise mittels Klettverschlüssen 18, Druckknöpfen 20 oder durch Kleben. Das Verschlusselement 6 ist im Wesentlichen aus der Polsterung und dem Überzug des Fahrzeugsitzes gefertigt, kann aber selbstverständlich auf der Seite des Kindersitzes 1 verstärkt werden. Um die Rückenpartie 8 separat zu stützen kann sie so gestaltet werden, dass sie unter Druckbeaufschlagung mit einer Blase 17 in die Öffnung 5 hineinreicht und sich dort selbst festklemmt.

Sinngemässe Lösungsformen lassen sich selbstverständlch auch für andere Anbringungsarten finden. Beispielsweise kann ein erfindungsgemässer Kindersitz 1, welcher sich aus dem Fahrzeugboden oder einer Armlehne entfaltet, über eine Blase 17 verfügen, die den Kindersitz 1 zwischen zwei Fahrzeugsitzen oder einem Fahrzeugsitz und einer Seitenwand des Fahrzeugs festklemmt.

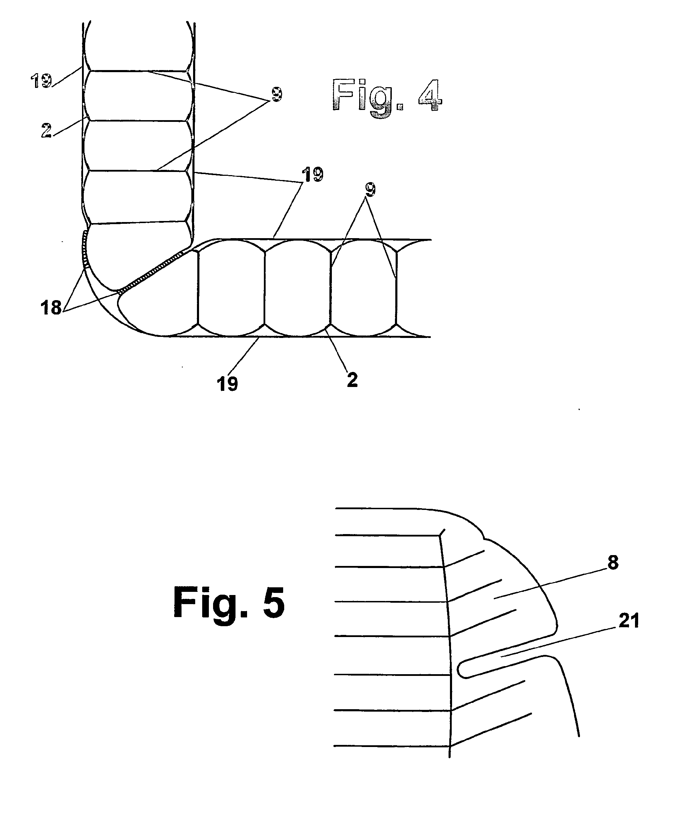

Ist die Verbindung zwischen Kindersitz 1 und Verschlusselement 6 lösbar gestaltet, so kann der Kindersitz 1, beziehungsweise nur das Sitzkissen 7 oder nur die Rückenpartie 8, äusserst einfach ausgetauscht werden. Es ist damit möglich, den Kindersitz 1 quasi mit einem Kind mitwachsen zu lassen. Die Breite und Höhe der Rückenpartie 8 sowie die Breite und Länge des Sitzkissens 7 können so durch Austauschen der Kissen 7, 8 variiert und angepasst werden. Es kann auch nur eines der Kissen 7, 8, verwendet werden, beispielsweise zur Erhöhung der Sitzposition. In einer Variante des Kindersitzes 1 können das Sitzkissen 7 und die Rückenpartie 8 zusammenhängend, also als ein einzelnes Kissen, gestaltet sein und wiederum lösbar mit dem Verschlusselement 6 verbunden werden. Fig 4 zeigt schematisch den Aufbau eines erfindungsgemässen Kindersitzes 1. Er besteht im Wesentlichen aus dem Sitzkissen 7 und der Rückenpartie 8, welche je aus einer Hülle 2 und darin eingeschweissten oder eingeklebten Stegen 9 gefertigt sind. Die Hülle 2 ist gasdicht und kann zu diesem Zweck beispielsweise aus einer PU-Folie oder einem PU-beschichteten, - laminierten oder -beflockten textilen Material aufgebaut sein. Die Form der Stege 9 bestimmt den Querschnitt des Sitzkissens 7 oder der Rückenbartie 8. Sind die Stege 9 U-artig angeordnet, so entsteht unter Druckbeaufschlagung eine Schalenform, sind sie rechteckig, entstehen brettartige Kissen 7,8. Weitere Formen und Ausführungen der Stege 9 sind ebenfalls erfindungsgemäss. Für die Formgebung reichen ein Überdruck von etwa 100-200 hPa. Die Befestigung der Kissen 7, 8 aneinander kann beispielsweise mit einem oder mehreren Klettverschlüssen 18 oder Druckknöpfen 20 realisiert werden. Zur individuellen Gestaltung können die Kissen 7, 8 auch mit einem auswechselbaren Überzug 19 versehen werden. Eine farbliche Anpassung an den persönlichen Geschmack oder an das Interieur des Fahrzeuges ist so einfach realisierbar. Auch Vorlieben für bestimmte Materialien sind berücksichtigbar.

In einem anderen nicht dargestellten Aufbau des erfindungsgemässen Kindersitzes 1 sind die Hülle 2 und die Stege 9 der Kissen 7, 8 ebenfalls aus Textilem Material gefertigt. In den Kammern zwischen den Stegen 9 und der Hülle 2 werden dann jedoch gasdichte Schläuche eingelegt und mit Druck beaufschlagt. Die Schläuche können eine oder mehrere zusammenhängende oder je eine einzelne gasdichte Kammer bilden. In einer solchen Konfiguration kann beispielsweise auf einen Überzug 19 verzichtet werden.

Der Ausschnitt in Fig 5 zeigt vergrössert einen Teil der Rükkenpartie 8 im Bereich einer Schulter eines sitzenden Kindes. Seitlich in die Rückenpartie 8 ist dort eine Ausnehmung 21 für ein Gurtband eines Dreipunktegurtes eingearbeitet. Zwischen dem Sitzkissen 7 und der Rückenpartie 8 im Bereich der Hüften können die beiden Kissen 7, 8 so gearbeitet sein, dass beidseitig Platz für den in etwa waagrecht verlaufenden Teil des Gurtbandes bleibt. Ein serienmässiger Dreipunktegurt kann somit in gewohnter Weise getragen werden. Ist in die Rückenpartie 8 beidseitig eine Ausnehmung 21 eingelassen, können auch Vierpunktgurten getragen werde. Diese eignen sich besonders für Kleinkinder.

## Patentansprüche

1. Fahrzeug mit einem Kindersitz, der im Wesentlichen aus einem aufblasbaren Sitzkissen (7) und/oder einer aufblasbaren Rückenpartie (8) besteht, wobei das Sitzkissen (7) und/oder die Rückenpartie (8) eine Hülle (2) aufweisen und sich unter Druckbeaufschlagung selbst entfalten, und der Kindersitz im im Wesentlichen leeren Zustand platzsparend im Inneren eines Fahrzeugs verstaut werden kann, **dadurch gekennzeichnet, dass** der Kindersitz in einer Öffnung (5) im Fahrzeuginneren verstaut werden kann und die Öffnung (5) angeordnet sein kann in
■ einer Rückenlehne (4) eines Fahrzeugsitzes,
■ einer Sitzfläche (3) eines Fahrzeugsitzes,
■ einer Seitenwand
■ einer Türe,
■ im Fahrzeugboden oder
■ in einer Armlehne,
und dass im druckbeaufschlagten Zustand des Kindersitzes (1) ein Teil der Hülle (2) als Blase (17) in die Öffnung (5) hineinragt und den Kindersitz (1) festklemmt und positioniert.

2. Kindersitz (1) für Fahrzeuge nach Patentanspruch 1, **dadurch gekennzeichnet, dass** die Öffnung (5) mit einem Verschlusselement (6) bündig und formschlüssig verschlossen werden kann.

3. Kindersitz (1) für Fahrzeuge nach einem der vorangehenden Patentanspruche, **dadurch gekennzeichnet, dass** er mit einer Vakuumpumpe (12) entleert werden kann.

4. Kindersitz (1) für Fahrzeuge nach einem der vorangehenden Patentansprüche, **dadurch gekennzeichnet, dass** das Verschlusselement (6) eine Hülle (2) aufweisen und
- den Kindersitz (1) im verstauten, leeren Zustand schützt,
- mit der Unterseite der Sitzfläche (7) oder der Rückseite der Rückenpartie (8) des Kindersitzes (1) lösbar oder fest verbunden ist und den Kindersitz (1) im geöffneten Zustand positioniert.

5. Kindersitz (1) für Fahrzeuge nach einem der vorangehenden Patentansprüche, **dadurch gekennzeichnet, dass** eine Ausnehmung (21) mindestens auf einer Seite im Schulterbereich des Kindersitzes (1) für das Tragen eines Dreipunkte- oder je eine Ausnehmung (21) beidseitig für das Tragen eines Vierpunktegurtes vorhanden ist.

6. Kindersitz (1) für Fahrzeuge nach einem der vorangehenden Patentansprüche, **dadurch gekennzeichnet, dass** das Sitzkissen (7) und die Rückenpartie (8) je separate Luftkissen sind, die lösbar miteinander verbunden werden können, oder dass das Sitzkissen und die Rückenpartie aus einem einzigen Luftkissen gebildet werden.

7. Kindersitz (1) für Fahrzeuge nach Patentanspruch 6, **dadurch gekennzeichnet, dass** die lösbaren Verbindungen mit Klettverschlüssen (18) oder Druckknöpfen (20) realisiert werden.

8. Kindersitz (1) für Fahrzeuge nach einem der vorangehenden Patentansprüche, **dadurch gekennzeichnet, dass** verschiedene Grössen und Formen des Sitzkissens (7) und der Rückenpartie (8) eingebaut werden können, und der Kindersitz (1) so den Körpermassen eines Kindes laufend angepasst werden kann.

9. Kindersitz (1) für Fahrzeuge nach einem der vorangehenden Patentansprüche, **dadurch gekennzeichnet, dass** Mittel zur Druckbeaufschlagung und Entleerung des Kindersitzes (1) vorhanden sind, welche einen Druckgasspeicher (11), eine Vakuumpumpe (12) sowie ein Wegeventil (13) umfassen, welche mit einem Drucksensor (16) und einer Steuerkonsole (15) mit mindestens einem Schalter gesteuert werden können.

10. Kindersitz (1) für Fahrzeuge nach einem der vorangehenden Patentansprüche, **dadurch gekennzeichnet, dass** seine Hülle (2)
- gasdicht ist und
- in ihrem Innern über Stege (9) verfügt, welche ihr im druckbeaufschlagten Zustand die äussere Form geben.

11. Kindersitz (1) für Fahrzeuge nach Patentanspruch 10, **dadurch gekennzeichnet, dass** die Hülle (2) aus einer PU-Folie oder einem PU-beschichteten, PU-laminierten oder beflockten textilen Material besteht.

12. Kindersitz (1) für Fahrzeuge nach einem der vorangehenden Patentansprüche, **dadurch gekennzeichnet, dass** um das Sitzkissen (7) und um die Rückenpartie (8) ein abnehmbarer Überzug (19) angebracht werden kann.

## Claims

1. A vehicle with a child seat, which consists essentially of an inflatable seat cushion (7) and/or an inflatable back part (8), wherein the seat cushion (7) and/or the back part (8) have a sleeve (2) and unfold themselves under pressure loading, and the child seat can be stowed in a space-saving manner in the interior of a vehicle when in the essentially empty state, **characterised in that** the child seat can be stowed in an opening (5) in the vehicle interior, and the opening (5) can be arranged in
- a backrest (4) of a vehicle seat,
- a seat area (3) of a vehicle seat,
- a side wall,
- a door,
- in the vehicle floor or
- in an armrest,
and that when the child seat (1) is in the pressure-loaded state, a part of the sleeve (2) projects as a balloon (17) into the opening (5) and clamps and positions the child seat (1).

2. A child seat (1) for vehicles according to Patent Claim 1, **characterised in that** the opening (5) can be closed in a flush and form-fitting manner with a closure element (6).

3. The child seat (1) for vehicles according to one of the preceding patent claims, **characterised in that** it can be emptied with a vacuum pump (12).

4. The child seat (1) for vehicles according to one of the preceding patent claims, **characterised in that** the closure element (6)
- protects the child seat (1) in the stowed, empty state,
- is connected releasably or permanently to the underside of the seat area (7) or the rear of the back part (8) of the child seat (1) and positions the child seat (1) in the open state.

5. The child seat (1) for vehicles according to one of the preceding patent claims, **characterised in that** a recess (21) is present at least on one side in the shoulder region of the child seat (1) for bearing a three-point belt, or a recess (21) is present in each case on both sides for bearing a four-point belt.

6. The child seat (1) for vehicles according to one of the preceding patent claims, **characterised in that** the seat cushion (7) and the back part (8) are in each case separate air cushions which can be connected releasably to each other, or that the seat cushion and the back part are formed from a single air cushion.

7. The child seat (1) for vehicles according to Patent Claim 6, **characterised in that** the releasable connections are realised with hook-and-loop fasteners (18) or press studs (20).

8. The child seat (1) for vehicles according to one of the preceding patent claims, **characterised in that** different sizes and shapes of the seat cushion (7) and back part (8) can be installed, and the child seat (1) can thus be adapted continuously to the body dimensions of a child.

9. The child seat (1) for vehicles according to one of the preceding patent claims, **characterised in that** means for pressure-loading and emptying of the child seat (1) are present, which comprise a pressurised gas store (11), a vacuum pump (12) and a directional valve (13), which can be controlled with a pressure sensor (16) and a control console (15) with at least one switch.

10. The child seat (1) for vehicles according to one of the preceding patent claims, **characterised in that** its sleeve (2)
- is gastight and
- has in its interior webs (9) which gives it the outer shape when in the pressure-loaded state.

11. The child seat (1) for vehicles according to Patent Claim 10, **characterised in that** the sleeve (2) consists of a PU film or a PU-coated, PU-laminated or flocked textile material.

12. The child seat (1) for vehicles according to one of the preceding patent claims, **characterised in that** a removable covering (19) can be applied around the seat cushion (7) and around the back part (8).

## Revendications

1. Véhicule comprenant un siège enfant, qui comprend essentiellement un coussin de siège (7) gonflable et/ou une partie dorsale (8) gonflable, le coussin de siège (7) et/ou la partie dorsale (8) présentant une enveloppe (2) et se dépliant sous l'effet de la pressurisation, et le siège enfant pouvant être rangé dans l'état essentiellement vide de façon peu encombrante à l'intérieur d'un véhicule, **caractérisé en ce que** le siège enfant peut être rangé dans une ouverture (5) à l'intérieur du véhicule et l'ouverture (5) peut être disposée dans
- un dossier (4) d'un siège de véhicule,
- une assise (3) d'un siège de véhicule,
- une paroi latérale
- une porte,
- dans le plancher du véhicule ou
- dans un accoudoir,
et **en ce qu'**une partie de l'enveloppe (2) dépasse à l'intérieur de l'ouverture (5) sous forme de vessie (17) lorsque le siège enfant (1) est pressurisé et bloque et positionne le siège enfant (1).

2. Siège enfant (1) pour véhicules selon la revendication 1, **caractérisé en ce que** l'ouverture (5) peut être fermée avec un élément de fermeture (6) en affleurement et par complémentarité de formes.

3. Siège enfant (1) pour véhicules selon l'une quelconque des revendications précédentes, **caractérisé en ce qu'**il peut être vidé avec une pompe à vide (12).

4. Siège enfant (1) pour véhicules selon l'une quelconque des revendications précédentes, **caractérisé en ce que** l'élément de fermeture (6)
- protège le siège enfant (1) dans l'état rangé et vide,
- est relié de façon amovible ou fixe à la face inférieure de l'assise (7) ou la face arrière de la partie dorsale (8) du siège enfant (1) et positionne le siège enfant (1) dans l'état ouvert.

5. Siège enfant (1) pour véhicules selon l'une quelconque des revendications précédentes, **caractérisé en ce qu'**un évidement (21) est présent au moins sur un côté dans la zone des épaules du siège enfant (1) pour le port d'une ceinture à trois points ou un évidement (21) est présent des deux cotés pour le port d'une ceinture à quatre points.

6. Siège enfant (1) pour véhicules selon l'une quelconque des revendications précédentes, **caractérisé en ce que** le coussin de siège (7) et la partie dorsale (8) sont des coussins d'air séparés, qui peuvent être reliés l'un à l'autre de façon amovible, ou **en ce que** le coussin de siège et la partie dorsale sont formés d'un seul coussin d'air.

7. Siège enfant (1) pour véhicules selon la revendication 6, **caractérisé en ce que** les liaisons amovibles sont réalisées avec des fermetures Velcro (18) ou des boutons à pression (20).

8. Siège enfant (1) pour véhicules selon l'une quelconque des revendications précédentes, **caractérisé en ce que** différentes grandeurs et formes du coussin de siège (7) et de la partie dorsale (8) peuvent être montées, et le siège enfant (1) peut être adapté ainsi en permanence aux dimensions du corps de l'enfant.

9. Siège enfant (1) pour véhicules selon l'une quelconque des revendications précédentes, **caractérisé en ce que** des moyens pour la pressurisation et le vidage du siège enfant (1) sont présents, lesquels comportent un réservoir de gaz sous pression (11), une pompe à vide (12) et un distributeur à positions fixes (13), lesquels peuvent être commandés avec un capteur de pression (16) et une console de commande (15) avec au moins un interrupteur.

10. Siège enfant (1) pour véhicules selon l'une quelconque des revendications précédentes, **caractérisé en ce que** son enveloppe (2)
- est étanche en gaz et
- dispose dans son intérieur d'entretoises (9) qui lui donnent la forme extérieure dans l'état pressurisé.

11. Siège enfant (1) pour véhicules selon la revendication 10, **caractérisé en ce que** l'enveloppe (2) est à base d'un film de polyuréthane ou d'un matériau recouvert de polyuréthane, stratifié en polyuréthane ou d'un matériau textile floqué.

12. Siège enfant (1) pour véhicules selon l'une quelconque des revendications précédentes, **caractérisé en ce qu'**un revêtement (19) amovible peut être placé autour du coussin de siège (7) et autour de la partie dorsale (8).
